# EUROPÄISCHE PATENTANMELDUNG

(11) **EP 1 972 515 A2**
(43) Veröffentlichungstag der Anmeldung: **24.09.2008**
(21) Anmeldenummer: 08152346.6
(22) Anmeldetag: 06.03.2008
(51) Int. Cl.: B60T 10/02

(54) **Dichteinrichtung zum Abdichten eines Retarders**

(30) Priorität: 21.03.2007 DE 102007013489
(71) Anmelder: ZF FRIEDRICHSHAFEN AG, 88038 Friedrichshafen (DE)
(72) Erfinder: Buri, Gerhard, 88677 Markdorf (DE); Sauter, Frank, 88074 Meckenbeuren (DE)

(57) **Zusammenfassung**

Es wird eine Dichteinrichtung zum Abdichten des Hochdruckbereichs vom Niederdruckbereich zwischen dem Rotor und dem Gehäuse eines Retarders vorgeschlagen, welche ein ringförmiges Dichtelement (5) umfasst, das im Bremsbetrieb des Retarders einen engen Dichtspalt (6) und im drucklosen Zustand einen zusätzlichen größeren Dichtspalt aufweist, wobei zumindest ein Teil des Dichtelementes (5) axial beweglich angeordnet ist, derart, dass beim Einleiten des Bremsbetriebs durch die Sogwirkung zum Niederdruckbereich (4) eine axiale Bewegung des Teiles des Dichtelementes (5) verursacht wird, die ein Verschließen des großen Dichtspaltes bewirkt.

## Beschreibung

Die vorliegende Erfindung betrifft eine Dichteinrichtung zum Abdichten des Hochdruckbereichs vom Niederdruckbereich zwischen dem Rotor und dem Gehäuse eines Retarders, gemäß dem Oberbegriff des Patentanspruchs 1.

Aus der DE 41 08 658 A1 der Anmelderin geht ein Kraftfahrzeug mit einem einem Zahnräderwechselgetriebe nachgeschalteten, hydrodynamischen Retarder hervor. Der bekannte hydrodynamische Retarder wird im Nebenabtrieb von einer Abtriebswelle eines Zahnräderwechselgetriebes über einen ins Schnelle übersetzten Stirnradtrieb angetrieben, wobei die Abtriebswelle über ein Wälzlager in einem mit einem Getriebegehäuse verschraubten Lagerdeckel gelagert ist. Eine aus Rotor und Stator bestehende Einheit des hydrodynamischen Retarders ist in einem Retardergehäuse angeordnet.

Zur Schaffung einer kompakten Bauweise der aus Zahnräderwechselgetriebe und Retarder bestehenden Einrichtung unter Beibehaltung eines möglichst großen Durchmessers von Stator und Rotor sowie einer möglichst großen Übersetzung ins Schnelle für die Hochtreiberstufe ist die aus Rotor und Stator bestehende Einheit in einen Einbauraum eingefügt, der in axialer Richtung durch das Wälzlager und den Abtriebsflansch begrenzt wird, wobei sich die Einheit in ihrer radialen Richtung bis in eine vom Wälzlager und/oder vom Abtriebsflansch in axialer Richtung projizierte Außenkontur erstreckt.

Aus dem Stand der Technik ist bekannt, bei einem Retarder den Hochdruckbereich vom Niederdruckbereich zwischen Rotor und Gehäuse mittels eines Kolbenringes abzudichten.

Des weiteren ist bekannt, als Dichteinrichtung eine Spaltdichtung vorzusehen. Bei dieser Konstruktion lässt sich infolge der relativ engen Spalte der Rotor in nachteiliger Weise relativ schwierig montieren. Ein weiteres Problem stellt die unterschiedliche Wärmeausdehnung von Rotor, der aus einem GGG-Werkstoff hergestellt ist, und Aluminiumgehäuse dar.

Der vorliegenden Erfindung liegt die Aufgabe zugrunde, eine Dichteinrichtung zum Abdichten des Hochdruckbereichs vom Niederdruckbereich zwischen dem Rotor und dem Gehäuse eines Retarders anzugeben, welche die aus dem Stand der Technik bekannten Nachteile vermeidet. Insbesondere soll eine einfache Montage des Rotors ermöglicht und eine ausreichende Abdichtung erzielt werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Dichteinrichtung zum Abdichten des Hochdruckbereichs vom Niederdruckbereich zwischen dem Rotor und dem Gehäuse eines Retarders vorgeschlagen, welche ein ringförmiges Dichtelement umfasst, das im Bremsbetrieb des Retarders einen relativ engen Dichtspalt und im drucklosen Zustand einen zusätzlichen größeren Dichtspalt aufweist, wobei zumindest ein Teil des Dichtelementes axial beweglich angeordnet ist, derart, dass beim Einleiten des Bremsbetriebs durch die Sogwirkung zum Niederdruckbereich eine axiale Bewegung des Teiles des Dichtelementes verursacht wird, die ein Verschließen des großen Dichtspaltes bewirkt.

Im Rahmen einer bevorzugten Ausführungsform der Erfindung ist das Dichtelement als Winkelring ausgebildet, welcher radial zum Rotor einen engen Dichtspalt und zum Gehäuse genügend Freiraum bzw. Spiel aufweist. In axialer Richtung ist das Dichtelement auf dem Rotor im Wesentlichen frei beweglich angeordnet; gemäß der Erfindung ist eine Schulter/Durchmesserstufe vorgesehen, welche einen eventuell zu großen axialen Weg im drucklosen Zustand verhindert.

Die Funktionsweise der erfindungsgemäßen Dichteinrichtung ist wie folgt: Geht der Retarder in den Brems-Betrieb, füllt sich unter anderem der Hochdruckbereich auf der Rückseite des Rotors mit Öl, welches somit auch den Bereich des Dichtelementes erreicht. Durch das Durchströmen des Öls durch den noch offenen großen Dichtspalt wird durch die entstehende Sogwirkung zum Niederdruckbereich der Winkelring an die entsprechend vorgesehene Dichtfläche des Gehäuses hingezogen und verschließt den freien Durchgang. Da in diesem Zustand nur der Dichtspalt zwischen Rotor und Dichtscheibe offen ist, wird sich hier durch die Rotation ein relativ zentrischer Dichtspalt und somit Dichtfilm einstellen. Durch die entsprechende Wahl des Werkstoffes des Dichtelementes lässt sich gemäß der Erfindung der Wärmeausdehnungs-Unterschied zwischen Rotor und Gehäuse ausschalten bzw. ausgleichen.

Gemäß der Erfindung sind auch weitere Ausführungsvarianten des Dichtelementes möglich; beispielsweise kann das Dichtelement zwei Dichtscheiben umfassen, wobei die eine Dichtscheibe innengeführt (also auf dem Rotor axial beweglich angeordnet) und die andere Dichtscheibe außengeführt (am Gehäuse angeordnet) ist.

Des weiteren ist es möglich, als Dichtelement einen einteiligen Ring vorzusehen, welcher axial zwischen dem Gehäuse und der Rotorwelle frei beweglich angeordnet ist.

Die Erfindung wird im Folgenden anhand der beigefügten Figuren beispielhaft näher erläutert.

Es zeigen:
- Fig. 1: eine schematische Schnittansicht einer ersten Ausführungsform der Erfindung, bei der das Dichtelement als Winkelring ausgeführt ist;
- Fig. 2: eine schematische Schnittansicht einer zweiten Ausführungsform der Erfindung, bei der das Dichtelement zwei Dichtscheiben aufweist und
- Fig. 3: eine schematische Schnittansicht einer weiteren Ausführungsform der Erfindung, bei der das Dichtelement einen Dichtring umfasst.

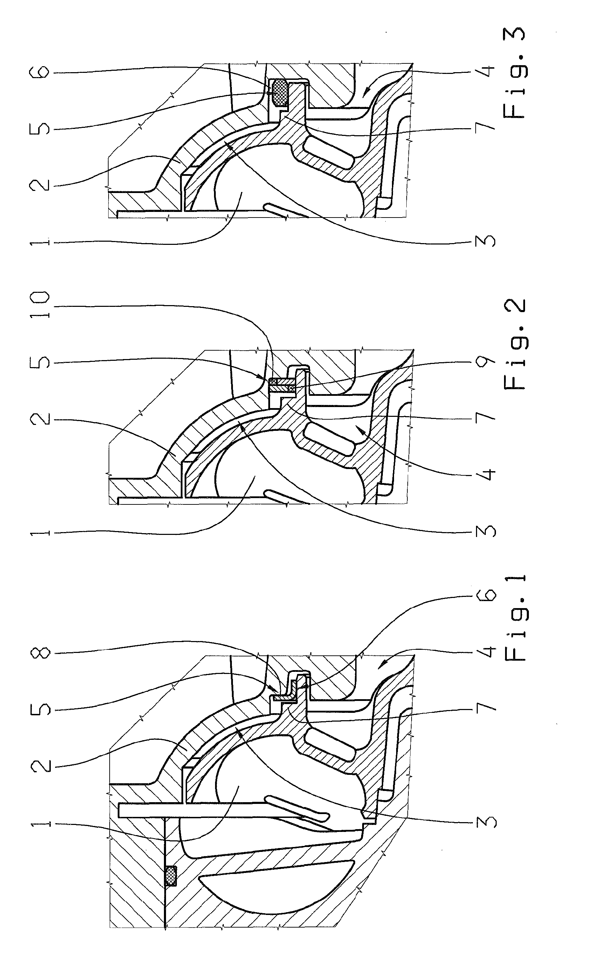

In den Fig. 1, 2 und 3 ist der Rotor des Retarders mit 1, das Gehäuse mit 2, der Hochdruckbereich mit 3 und der Niederdruckbereich mit 4 bezeichnet.

Gemäß der Erfindung umfasst die Dichteinrichtung zum Abdichten des Hochdruckbereichs 3 vom Niederdruckbereich 4 zwischen dem Rotor 1 und dem Gehäuse 2 eines Retarders ein ringförmiges Dichtelement 5, das im Bremsbetrieb des Retarders einen relativ engen Dichtspalt und im drucklosen Zustand einen zusätzlichen größeren Dichtspalt aufweist, wobei zumindest ein Teil des Dichtelementes axial beweglich angeordnet ist, derart, dass durch die Sogwirkung zum Niederdruckbereich beim Einleiten des Bremsbetriebs eine axiale Bewegung des Teiles des Dichtelementes verursacht wird, die ein Verschließen des großen Dichtspaltes bewirkt.

Wie in Fig. 1 gezeigt, kann das Dichtelement 5 als Winkelring ausgebildet sein, der radial zum Rotor einen engen Dichtspalt 6 und zum Gehäuse im drucklosen Zustand genügend Freiraum bzw. Spiel aufweist, so dass ein großer Dichtspalt entsteht. In axialer Richtung ist der Winkelring auf dem Rotor im Wesentlichen frei beweglich angeordnet, wobei der Rotor 1 eine Schulter/ Durchmesserstufe 7 aufweist, die einen eventuell zu großen axialen Weg im drucklosen Zustand verhindert. Beim Einleiten des Bremsbetriebs wird durch das Durchströmen des Öls durch den noch offenen großen Dichtspalt zwischen Gehäuse und Winkelring aufgrund der entstehenden Sogwirkung zum Niederdruckbereich der Winkelring an die entsprechend vorgesehene Dichtfläche 8 des Gehäuses 2 hingezogen, wodurch der freie Durchgang verschlossen wird.

Bei der in Fig. 2 dargestellten Ausführungsform umfasst das Dichtelement 5 zwei Dichtscheiben 9, 10, wobei die eine Dichtscheibe 9 auf dem Rotor 1 axial beweglich angeordnet ist und die andere Dichtscheibe 10 fest mit dem Gehäuse 2 verbunden ist. Beim Einleiten des Bremsbetriebs wird die Dichtscheibe 9 gegen die Dichtscheibe 10 gedrückt, so dass lediglich ein kleiner Dichtspalt offen bleibt. Auch bei diesem Ausführungsbeispiel ist eine Schulter/Durchmesserstufe 7 vorgesehen, die einen eventuell zu großen axialen Weg im drucklosen Zustand verhindert.

In Fig. 3 ist eine weitere Ausführungsform dargestellt, bei der das Dichtelement 5 als Dichtring ausgebildet ist. Hierbei ist der Dichtring axial verschiebbar angeordnet und dichtet analog zu den beiden bereits beschriebenen Ausführungsformen aufgrund der Sogwirkung im Bremsbetrieb den Hochdruckbereich 3 vom Niederdruckbereich 4 ab. Auch in diesem Fall ist im Bremsbetrieb ein definierter Dichtspalt 6 vorgesehen. Des weiteren ist zum Verhindern eines zu großen axialen Weges des Dichtringes im drucklosen Zustand auf dem Rotor 1 eine Schulter/Durchmesserstufe 7 vorgesehen.

### Bezugszeichen

- 1: Rotor
- 2: Gehäuse
- 3: Hochdruckbereich
- 4: Niederdruckbereich
- 5: Dichtelement
- 6: Dichtspalt
- 7: Schulter/Durchmesserstufe
- 8: Dichtfläche des Gehäuses
- 9: Dichtscheibe
- 10: Dichtscheibe

## Patentansprüche

1. Dichteinrichtung zum Abdichten des Hochdruckbereichs vom Niederdruckbereich zwischen dem Rotor und dem Gehäuse eines Retarders, **dadurch gekennzeichnet, dass** sie ein ringförmiges Dichtelement (5) umfasst, das im Bremsbetrieb des Retarders einen engen Dichtspalt (6) und im drucklosen Zustand einen zusätzlichen größeren Dichtspalt aufweist, wobei zumindest ein Teil des Dichtelementes (5) axial beweglich angeordnet ist, derart, dass beim Einleiten des Bremsbetriebs durch die Sogwirkung zum Niederdruckbereich (4) eine axiale Bewegung des Teiles des Dichtelementes (5) verursacht wird, die ein Verschließen des großen Dichtspaltes bewirkt.

2. Dichteinrichtung nach Anspruch 1, **dadurch gekennzeichnet, dass** das Dichtelement (5) als Winkelring ausgebildet ist, der radial zum Rotor (1) einen engen Dichtspalt (6) und zum Gehäuse (2) im drucklosen Zustand genügend Freiraum bzw. Spiel aufweist, wobei der Winkelring auf dem Rotor (1) in axialer Richtung im Wesentlichen frei beweglich angeordnet ist und wobei eine Schulter/Durchmesserstufe (7) vorgesehen ist, die einen eventuell zu großen axialen Weg im drucklosen Zustand verhindert.

3. Dichteinrichtung nach Anspruch 1, **dadurch gekennzeichnet, dass** das Dichtelement (5) zwei Dichtscheiben (9, 10) umfasst, wobei die eine Dichtscheibe (9) auf dem Rotor (1) axial beweglich angeordnet ist und die andere Dichtscheibe (10) fest mit dem Gehäuse (2) verbunden ist, so dass beim Einleiten des Bremsbetriebs die Dichtscheibe (9) gegen die Dichtscheibe (10) gedrückt wird.

4. Dichteinrichtung nach Anspruch 1, **dadurch gekennzeichnet, dass** das Dichtelement (5) als Dichtring ausgebildet ist, der axial verschiebbar angeordnet ist, so dass aufgrund der Sogwirkung im Bremsbetrieb der Hochdruckbereich (3) vom Niederdruckbereich (4) durch die axiale Verschiebung des Dichtringes abgedichtet wird.

5. Dichteinrichtung nach Anspruch 1, 2, 3 oder 4, **dadurch gekennzeichnet, dass** der Werkstoff des Dichtelementes (5) derart gewählt ist, dass der Wärmeausdehnungs-Unterschied zwischen Rotor (1) und Gehäuse (2) ausgeglichen wird.
